# EUROPEAN PATENT APPLICATION

(11) **EP 4 434 921 A1**
(43) Date of publication of application: **25.09.2024**
(21) Application number: 24159687.3
(22) Date of filing: 26.02.2024
(51) Int. Cl.: B65G 35/00, F16B 5/06

(54) **AUTOMATION SYSTEM COVER**

(30) Priority: 15.03.2023 CN 202310252047
(71) Applicant: Intelligrated Headquarters LLC, Mason, OH 45040 (US)
(72) Inventor: WANG, Dongdong, Charlotte, 28202 (US); YU, Feng, Charlotte, 28202 (US); QU, Tiecheng, Charlotte, 28202 (US); LI, Shun, Charlotte, 28202 (US)
(74) Representative: Haseltine Lake Kempner LLP

(57) **Abstract**

A track assembly for an automation system can define a horizontal direction, a vertical direction, and a transverse direction. The track assembly can include a track, a cover, and a clip. The track can include a hole and the cover can include a groove that extends in the horizontal direction. The clip can be configured to slide within the groove of the cover and configured to be positioned, at least partially, within the hole of the track.

## Description

### TECHNICAL FIELD

The present application relates generally to covers. More specifically, the present application relates to protective covers for automation systems, such as sortation systems and conveyer systems.

### BACKGROUND

Automation systems, such as sortation systems and conveyer systems, are often installed in warehouses, such as automated and smart warehouses. These automation systems have tracks and movable components that move in relation to the tracks, such as conveyer belts, cables, rollers, wheels, and bearings. It may be desirable to provide covers for the tracks to protect a user of the automation system from touching the moving components of the systems or to protect the moving components from dirt and debris.

Traditionally, covers are coupled to the tracks of the automation system with traditional fastening devices, such as with rivots, bolts, and screws. These traditional fastening devices can be unsightly and may give the perception that the automation system is of low quality. Also, installing the covers with these traditional fastening devices can be time-consuming. As will be appreciated, various automation systems are often several miles long and may require an immense amount of traditional fasteners to be manually used to fasten the covers onto the tracks. Additionally, tools, such as wrenches and drills, are required with these traditional fastening devices. Because installing the covers with traditional fastening devices and methods can be time-consuming, the labor costs can be relatively high.

The inventors have identified numerous deficiencies and problems with the existing technologies in this field. Through applied effort, ingenuity, and innovation, many of these identified deficiencies and problems have been solved by developing solutions that are structured in accordance with the embodiments of the present disclosure, many examples of which are described in detail herein.

### BRIEF SUMMARY

In general, embodiments of the present disclosure provided herein include systems and methods to provide for improved automation systems, such as sortation systems and conveyer systems, that are often installed in warehouses, such as automated and smart warehouses. More specifically, embodiments of the present disclosure provided herein provide for improved track assemblies and improved covers for automation systems.

In various aspects, a track assembly for an automation system is provided. The track assembly can define a horizontal direction, a vertical direction, and a transverse direction. The track assembly can include a track, a cover, and a clip. The track can include a hole and the cover can include a groove that extends in the horizontal direction. The clip can be configured to slide within the groove of the cover and configured to be positioned, at least partially, within the hole of the track.

In various examples, the groove of the cover extends completely along a horizontal length of the cover. The clip can be configured to slide within the groove completely along the horizontal length of the cover.

In various examples, the track assembly includes a first guide member and a second guide member that define the groove. For example, the first guide member and the second guide member can collectively define the groove. The first guide member and the second guide member can extend towards each other in the vertical direction.

In various examples, the clip includes a first positioning member and a second positioning member that each extend along a plane defined by the horizontal direction and the vertical direction. The first positioning member of the clip can be configured to be positioned within the groove. The clip can also include an arrow-shaped head that is configured to be positioned within the hole of the track.

In various examples, the track of the track assembly can include a flange that extends vertically. The cover can include a second groove that extends in the horizontal direction. The flange of the track can be configured to be positioned within the second groove. The track of the track assembly can be S-shaped. The cover can include a first prong and a second prong. The first prong and the second prong can define the second groove.

In various examples, the track assembly comprises a plurality of clips and the track comprises a plurality of holes. Each clip can be configured to be positioned, at least partially, within a corresponding hole of the track.

In various aspects, an automation system includes a track assembly and a moveable component. The moveable component can be configured to move in relation to the track assembly. The track assembly can define a horizontal direction, a vertical direction, and a transverse direction. The track assembly can include a track, a cover, and a clip. The track can include a hole and the cover can include a groove that extends in the horizontal direction. The clip can be configured to slide within the groove of the cover and configured to be positioned, at least partially, within the hole of the track.

In various examples, the groove of the cover extends completely along a horizontal length of the cover. The clip can be configured to slide within the groove completely along the horizontal length of the cover.

In various examples, the track assembly includes a first guide member and a second guide member that define the groove. For example, the first guide member and the second guide member can collectively define the groove. The first guide member and the second guide member can extend towards each other in the vertical direction.

In various examples, the clip includes a first positioning member and a second positioning member that each extend along a plane defined by the horizontal direction and the vertical direction. The first positioning member of the clip can be configured to be positioned within the groove. The clip can also include an arrow-shaped head that is configured to be positioned within the hole of the track.

In various examples, the track of the track assembly can include a flange that extends vertically. The cover can include a second groove that extends in the horizontal direction. The flange of the track can be configured to be positioned within the second groove. The track of the track assembly can be S-shaped. The cover can include a first prong and a second prong. The first prong and the second prong can define the second groove.

In various examples, the track assembly comprises a plurality of clips and the track comprises a plurality of holes. Each clip can be configured to be positioned, at least partially, within a corresponding hole of the track.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below. Other features, aspects, and advantages of the subject matter will become apparent from the description, the drawings, and the claims.

### BRIEF DESCRIPTION OF THE DRAWINGS

Having thus described certain example embodiments of the present disclosure in general terms above, non-limiting and non-exhaustive embodiments of the subject disclosure are described with reference to the following figures, which are not necessarily drawn to scale and wherein like reference numerals refer to like parts throughout the various views unless otherwise specified. The components illustrated in the figures may or may not be present in certain embodiments described herein. Some embodiments may include fewer (or more) components than those shown in the figures.
FIG. 1 provides a perspective view of an automation system, in accordance with an example embodiment.
FIG. 2 provides a perspective view of a track assembly for an automation system, in accordance with an example embodiment.
FIG. 3 provides a perspective view of the track assembly of FIG. 2, in accordance with an example embodiment.
FIG. 4 provides a side view of the track assembly of FIG. 2, in accordance with an example embodiment.
FIGS. 5 and 6 provide a side view of a cover and a clip of the track assembly of FIG. 2, in accordance with an example embodiment.
FIGS. 7-10 provide perspective views of the track assembly during different stages of installation, in accordance with an example embodiment.

### DETAILED DESCRIPTION

One or more embodiments are now more fully described with reference to the accompanying drawings, wherein like reference numerals are used to refer to like elements throughout and in which some, but not all embodiments of the inventions are shown. In the following description, for purposes of explanation, numerous specific details are set forth in order to provide a thorough understanding of the various embodiments. It is evident, however, that the various embodiments can be practiced without these specific details. It should be understood that some, but not all embodiments are shown and described herein. Indeed, the embodiments may be embodied in many different forms, and accordingly this disclosure should not be construed as limited to the embodiments set forth herein. Rather, these embodiments are provided so that this disclosure will satisfy applicable legal requirements.

As used herein, the term "exemplary" means serving as an example, instance, or illustration. Any aspect or design described herein as "exemplary" is not necessarily to be construed as preferred or advantageous over other aspects or designs. Rather, use of the word exemplary is intended to present concepts in a concrete fashion. In addition, while a particular feature may be disclosed with respect to only one of several implementations, such feature may be combined with one or more other features of the other implementations as may be desired and advantageous for any given or particular application. Furthermore, to the extent that the terms "includes" and "including" and variants thereof are used in either the detailed description or the claims, these terms are intended to be inclusive in a manner similar to the term "comprising."

As used herein, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

As used herein, the terms "coupled," "fixed," "attached to," and the like refer to both direct coupling, fixing, or attaching, as well as indirect coupling, fixing, or attaching through one or more intermediate components or features, unless otherwise specified herein.

As used herein, the term "positioned directly on" refers to a first component being positioned on a second component such that they make contact. Similarly, as used herein, the term "positioned directly between" refers to a first component being positioned between a second component and a third component such that the first component makes contact with both the second component and the third component. In contrast, a first component that is "positioned between" a second component and a third component may or may not have contact with the second component and the third component. Additionally, a first component that is "positioned between" a second component and a third component is positioned such that there may be other intervening components between the second component and the third component other than the first component.

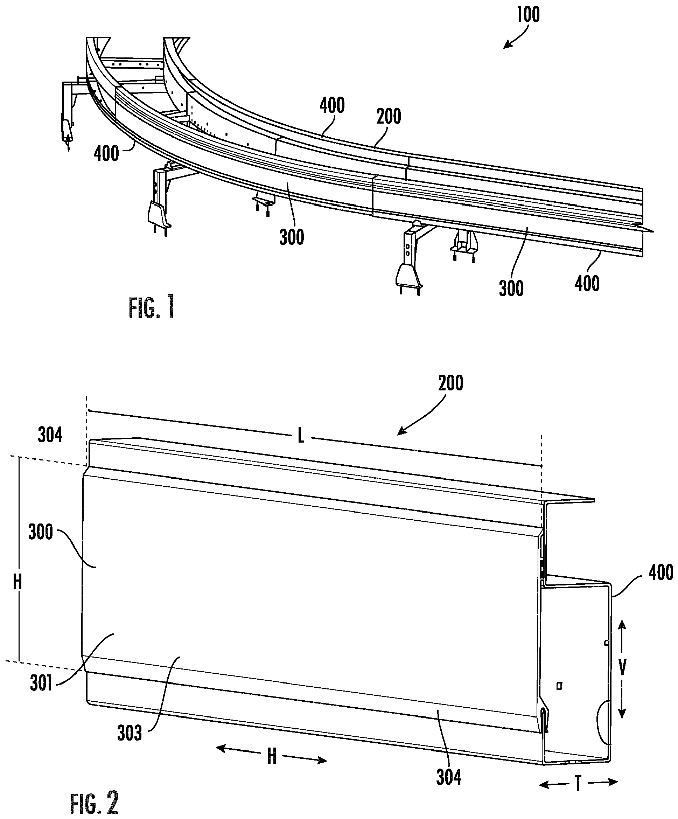

Referring now to FIG. 1, a perspective view of an automation system 100 is provided, in accordance with an example embodiment. In various examples, and as depicted, the automation system 100 is a sortation system. More specifically, the depicted automation system 100 is a loop sorter. However, in various other examples, the automation system 100 can be a sweeper sorter, a cross-belt sorter, a sliding shoe sorter, a tilt-tray sorter, a push tray sorter, a strip-belt sorter, a popup wheel sorter, a bomb bay sorter, or a vertical sortation system. In various examples, the automation system 100 is a conveyor system. For example, the automation system 100 can be a case, tote, and polybag conveyor, a pallet conveyor, an accumulation conveyor, a transportation conveyor, a curve conveyor, a merging and diverting conveyor, a horizontal distribution conveyor, or a vertical indexing conveyor.

The automation system 100 can include a track assembly 200. The track assembly 200 can include at least one track 400 and at least one cover 300. The automation system 100 can also include movable components (not depicted) that are movably coupled to and/or proximate to the track assembly 200, and are configured to move in relation to the track assembly 200. For example, the movable components can be conveyer belts, cables, rollers, bearings, etc. The cover 300 can be provided to prevent a person from touching the movable components and/or to protect the movable components from dirt and debris. The cover 300 may increase the safety of the automation system 100 or track assembly 200 by providing a barrier between movable components and a person. The cover 300 may increase the durability of the automation system 100 or the track assembly 200 by reducing the amount of dust or debris that may enter the automation system 100 or track assembly 200.

As will be discussed in more detail, the at least one cover 300 of the present disclosure provides a smooth, finished appearance that may increase a perceived quality of the automation system 100. Also, the at least one cover 300 of the present disclosure may be easier, cheaper, and quicker to install than traditional covers and installation methods. Additionally, unlike traditional covers and installation methods, the at least one cover 300 of the present disclosure does not require any tools to install and can be installed by hand. Even though the cover 300 will be described as it relates to the automation system 100, it should be understood that the cover 300 can be used for any system or machine that may benefit from a barrier for components of the system or machine.

Referring now to FIG. 2, a perspective view of a track assembly 200 is provided, in accordance with an example embodiment. The track assembly 200 can define a horizontal direction H, a vertical direction V that is orthogonal to the horizontal direction H, and a transverse direction T that is orthogonal to both the horizontal direction H and the vertical direction V. As discussed, the track assembly 200 can include at least one cover 300 and at least one track 400. Each cover 300 can include a first side 301 that faces away from the track 400. The first side 301 of the cover 300 can define a surface 303 that is substantially flat and extends in the horizontal direction and in the vertical direction. The surface 303 of the cover 300 can extend completely along a horizontal length L of the cover 300. The surface 303 of the cover 300 can extend almost completely along a vertical height H of the cover 300. For example, at least ninety percent of the first side 301 of the cover 300 can include the surface 303 that is flat. Including the surface 303 that is flat may increase the aesthetics of the cover 300 and the track assembly 200. Notably, the first side 301 of the cover 300 does not include any orifices or protrusions, which may also increase the aesthetics of the cover 300 and the track assembly 200. Also, because the cover 300 includes a surface 303 that is flat, branding logos may be applied to the cover 300 to increase brand value or brand recognition. The first side 301 can also include one or more tapered portions 304 that may increase the aesthetics of the cover 300 and the track assembly 200. Additionally, and as will be discussed in more detail, the track assembly 200 does not include any visible fasteners, which may also increase the aesthetics of the cover 300 and the track assembly 200.

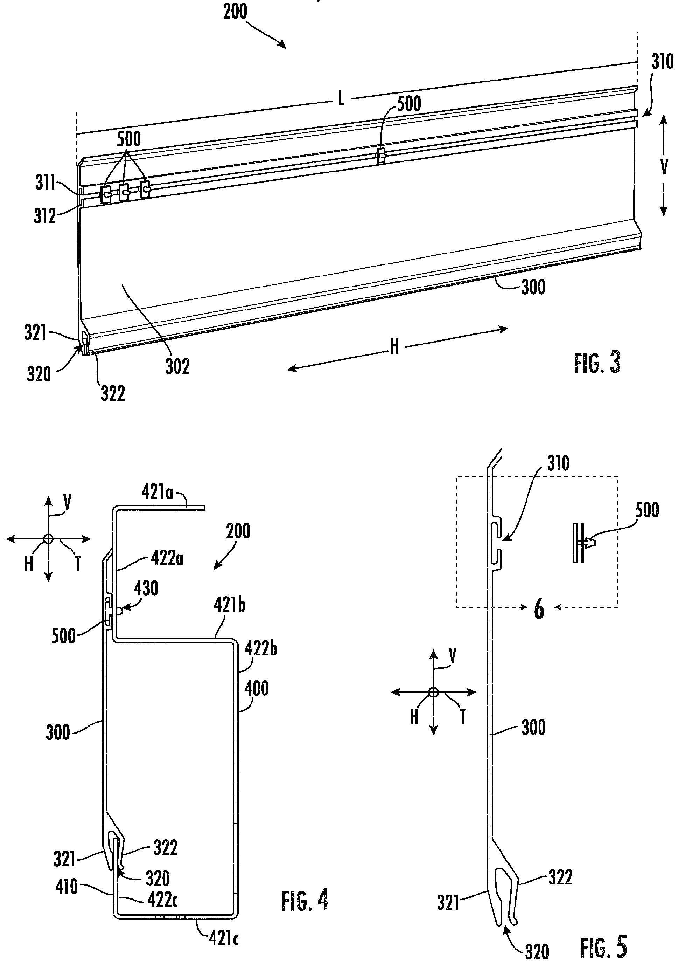

Referring now to FIG. 3, a perspective view of the track assembly 200 of FIG. 2 is provided, in accordance with an example embodiment. More specifically, this view provides a backside view of the track assembly 200 without the track 400. The cover 300 can include a second side 302 that is opposite from the first side 301 (FIG. 2) and faces toward the track 400 (FIG. 2). Stated differently, the first side 301 of the cover 300 is the front side of the cover 300 and the second side 302 of the cover 300 is the backside of the cover 300. The second side 302 of the cover 300 can include a groove 310. The groove 310 can extend continuously the entire horizontal length L of the cover 300. However, in various other examples, the groove 310 extends only partially along the horizontal length L of the cover 300.

The track assembly 200 can include at least one clip 500. For example, the track assembly 200 can include one clip 500, two clips 500, three clips 500, four clips 500, five clips 500, etc. Each clip 500 can be configured to slide within the groove 310 of the cover 300. For example, each clip 500 can be configured to be positioned, at least partially, within the groove 310 of the cover 300.

Positioning the clip 500 within the groove 310 has various benefits. For example, each of the clips 500 are only visible on the second side 302 of the cover 300. As will be appreciated, only the first side 301 of the cover 300 is visible when installed onto the track 400. As such, each of the clips 500 are hidden once the cover 300 is installed on the track 400, which may increase the aesthetics of the cover 300 and track assembly 200.

Referring now to FIG. 4, a side view of the track assembly 200 of FIG. 2 is provided, in accordance with an example embodiment. In various examples, and as depicted in FIG. 4, the track 400 is S-shaped. More specifically, the track 400 can include a first transverse extending portion 421a, a second transverse extending portion 421b, and a third transverse extending portion 421c that are each connected to one or two of a first vertical extending portion 422a, a second vertical extending portion 422b, and a third vertical extending portion 422c. The first vertical extending portion 422a and the third vertical extending portion 422c can both be positioned on a plane that extends in the horizontal direction H and the vertical direction V. The concave shape formed by portions 421a, 422a, and 421b may be configured to accommodate moveable components, such as bearings, rollers, belts, and/or wheels of the automation system 100 (FIG. 1). The concave shape formed by portions 421b, 422b, and 421c can be configured to accommodate movable components, such as cables of the automation system 100.

In various examples, and as depicted in FIG. 4, the clip 500 is configured to be positioned, at least partially, within a hole 430 of the track 400. More specifically, the clip 500 can be configured to be positioned, at least partially within a hole 430 of the first vertical extending portion 422a.

Still referring to FIG. 4, the cover 300 can include a first prong 321, a second prong 322, and a second groove 320 that is defined by the first prong 321 and the second prong 322. The first prong 321, the second prong 322, and the second groove 320 can extend completely along the horizontal length L (FIG. 3) of the cover 300. The first prong 321 and the second prong 322 can be configured to, collectively, bestride at least a portion of a flange 410 of the track 400. The flange 410 can extend in the vertical direction V and in the horizontal direction H.

As discussed, various features of the cover 300, such as the first prong 321, the second prong 322, and the groove 310 can extend completely along the horizontal length L (FIG. 3) of the cover 300. In various examples, a cross-sectional shape of the cover 300 is consistently the same along the horizontal length L of the cover 300. This configuration has various benefits. For example, it allows for the cover 300 to be manufactured with an extrusion process. The extrusion process may allow for manufacturing costs of the cover 300 to be reduced. Additionally, the extrusion process may allow for the cover 300 to be manufactured from a non-metal material, such as plastic. Manufacturing the cover 300 from a non-metal material may reduce the weight of the cover 300, as opposed to manufacturing the cover 300 from a metal.

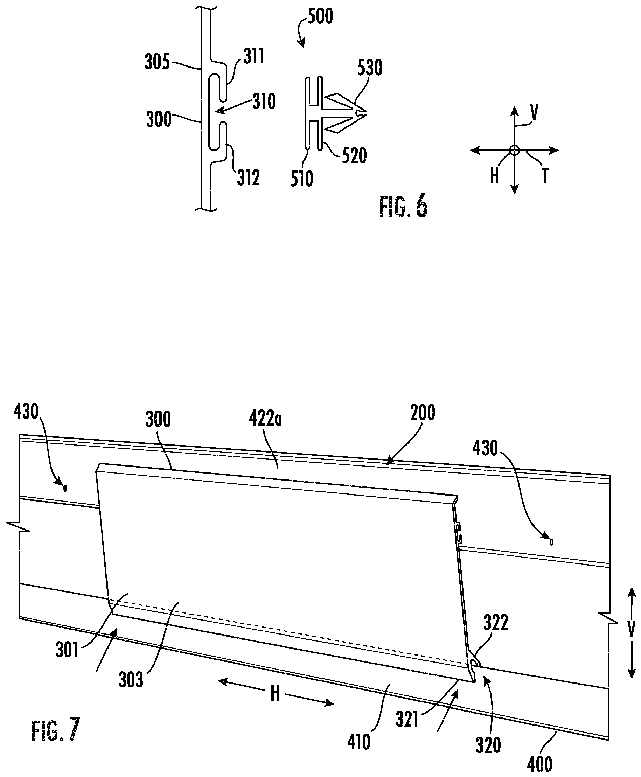

Referring now to FIG. 5 and FIG. 6, a side view of the cover 300 and the clip 500 of the track assembly 200 of FIG. 2 is provided, according to an example embodiment. In various examples, and as best seen in FIG. 6, the cover 300 includes a first guide member 311 and a second guide member 312. Each of the first guide member 311 and the second guide member 312 are positioned away from a main body 305 of the cover 300. The first guide member 311 can extend vertically toward the second guide member 312, and vice-versus. The first guide member 311 and the second guide member 312 can be spaced apart such that they do not make contact.

In various examples, and as best seen in FIG. 6, the clip 500 can include a first positioning member 510 and a second positioning member 520. The first positioning member 510 can be configured to be positioned within the groove 310 of the cover 300, whereas the second positioning member 520 can be configured to be positioned outside of the groove 310 of the cover 300. The first positioning member 510 and the second positioning member 520 can, collectively, be configured to bestride the first guide member 311 and the second guide member 312. This configuration allows the clip 500 to move horizontally along the groove 310, while not allowing the clip to move transversally or vertically. Stated differently, this configuration allows the clip 500 to slide within the groove 310 and also prevents the clip 500 from falling out of the groove 310.

The clip 500 can include an arrow-shaped head 530. The arrow-shaped head 530 can be configured to be positioned outside of the groove 310. The arrow-shaped head 530 can extend in the transverse direction T and away from the second positioning member 520. The arrow-shaped head 530 can be configured to be positioned within the hole 430 (FIG. 4) of the track 400.

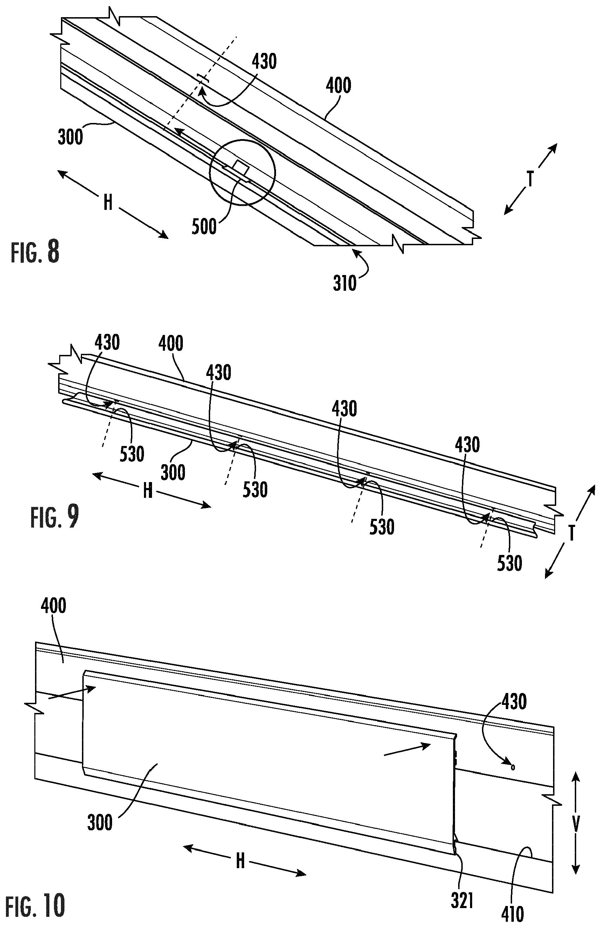

Referring now to FIGS. 7-10, perspective views of the track assembly 200 during different stages of installation are provided, according to an example embodiment. More specifically, FIG. 7 depicts a first step of assembling the track assembly 200 that includes mating the second groove 320 of the cover 300 with the flange 410 of the track 400. FIG. 8 depicts a second step of assembling the track assembly 200 that includes sliding at least one clip 500 along the horizontal direction within the groove 310 of the cover 300. FIG. 9 depicts a third step of assembling the track assembly 200 that includes aligning at least one clip 500 with a corresponding hole 430 of the track 400. In various examples, and as depicted, a plurality of clips 500 are each aligned with a corresponding hole 430 of a plurality of holes 430. FIG. 10 depicts a fourth step of assembling the track assembly 200 that includes pressing the cover 300 towards the track 400 until the head 530 of the clip 500 is positioned within the corresponding hole 430 of the track 400.

The installation process for the one or more covers 300 may cost less and may be less time-consuming than the installation process for traditional covers. As discussed, traditional covers often require traditional fasteners, such as screws, bolts, and rivets. As will be appreciated, sorter systems are often several miles long and installing traditional covers with traditional fasteners can be tedious, time-consuming, and costly. In contrast, the installation process of the one or more covers 300 of the present disclosure is relatively easy, less time-consuming, and can be installed by hand.

Notably, the installation of the cover 300 onto the track 400 is not permanent and the cover 300 can be decoupled from the track 400 without damaging the cover 300, the track 400, or the one or more clips 500. For example, the cover 300 can either be slid, by hand, until the clips 500 are not within the groove 310 of the cover 300. Alternatively, the cover 300 can be pulled away, by hand, from the track 400 until the head 530 of each clip 500 is removed from its corresponding hole 430. In contrast, decoupling traditional covers from the track 400 may be more difficult because traditional fasteners would need to be removed with a tool, such as with a drill or wrench, which is more time-consuming than hand uninstallation.

Referring back to FIG. 1, a plurality of covers 300 can be installed on the track 400. In various examples, and as depicted in FIG. 1, the plurality of covers 300 can be installed side-by-side with each other. Notably, each cover 300 is configured to move horizontally along the track 400 once installed because each clip 500 is slidingly engaged with the groove 310 of the cover 300. Therefore, each cover 300 can be positioned such that gaps between adjacent covers 300 is minimized. As will be appreciated, the minimization of gaps, along with the smooth appearance of the cover 300 that does not include any visible fasteners or holes, creates a finished appearance. This finished appearance may increase a perceived quality of the automation system 100.

### Conclusion

The above descriptions of various embodiments of the subject disclosure and corresponding figures and what is described in the Abstract, are described herein for illustrative purposes, and are not intended to be exhaustive or to limit the disclosed embodiments to the precise forms disclosed. It is to be understood that one of ordinary skill in the art may recognize that other embodiments having modifications, permutations, combinations, and additions can be implemented for performing the same, similar, alternative, or substitute functions of the disclosed subject matter, and are therefore considered within the scope of this disclosure. Therefore, the disclosed subject matter should not be limited to any single embodiment described herein, but rather should be construed in breadth and scope in accordance with the appended claims below. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A track assembly (200) for an automation system (100), the track assembly (200) defining a horizontal direction, a vertical direction, and a transverse direction, the track assembly (200) comprising:
a track (400) comprising a hole (430);
a cover (300) that comprises a groove (310) that extends in the horizontal direction; and
a clip (500) that is configured to slide within the groove (310) of the cover (300) and further configured to be positioned, at least partially, within the hole (430) of the track (400).

2. The track assembly (200) of claim 1, wherein the groove (310) of the cover (300) extends completely along a horizontal length of the cover (300).

3. The track assembly (200) of claim 2, wherein the clip (500) is configured to slide within the groove (310) completely along the horizontal length of the cover (300).

4. The track assembly (200) of claim 1, further comprising a first guide member (311) and a second guide member (312) that define the groove (310), wherein the first guide member (311) and the second guide member (312) extend towards each other in the vertical direction.

5. The track assembly (200) of claim 1, wherein the clip (500) comprises a first positioning member (510) and a second positioning member (520) that each extend along a plane defined by the horizontal direction and the vertical direction, and wherein the first positioning member (510) is configured to be positioned within the groove (310).

6. The track assembly (200) of claim 5, wherein the clip (500) comprises an arrow-shaped head (530) that is configured to be positioned within the hole (430) of the track (400).

7. The track assembly (200) of claim 1, wherein the track (400) comprises a flange (410) that extends vertically, wherein the cover (300) comprises a second groove (320) that extends in the horizontal direction, and wherein the flange (410) of the track (400) is configured to be positioned within the second groove (320).

8. The track assembly (200) of claim 7, wherein the cover (300) comprises a first prong (321) and a second prong (322), and wherein the first prong (321) and the second prong (322) define the second groove (320).

9. The track assembly (200) of claim 1, wherein the track (400) is s-shaped.

10. The track assembly (200) of claim 1, wherein the track assembly (200) comprises a plurality of clips (500) and the track (400) comprises a plurality of holes (430), wherein each clip (500) is configured to be positioned, at least partially, within a corresponding hole (430) of the track (400).

11. An automation system (100) comprising:
a track assembly (200); and
a moveable component that is configured to move in relation to the track assembly (200), wherein the track assembly (200) defines a horizontal direction, a vertical direction, and a transverse direction, the track assembly (200) comprising:
a track (400) comprising a hole (430);
a cover (300) that comprises a groove (310) that extends in the horizontal direction; and
a clip (500) that is configured to slide within the groove (310) of the cover (300) and further configured to be positioned, at least partially, within the hole (430) of the track (400).

12. The track assembly (200) of claim 11, wherein the groove (310) of the cover (300) extends completely along a horizontal length of the cover (300).

13. The track assembly (200) of claim 12, wherein the clip (500) is configured to slide within the groove (310) completely along the horizontal length of the cover (300).

14. The track assembly (200) of claim 11, further comprising a first guide member (311) and a second guide member (312) that define the groove (310), wherein the first guide member (311) and the second guide member (312) extend towards each other in the vertical direction.

15. The track assembly (200) of claim 11, wherein the clip (500) comprises a first positioning member (510) and a second positioning member (520) that each extend along a plane defined by the horizontal direction and the vertical direction, and wherein the first positioning member (510) is configured to be positioned within the groove (310).
